# EUROPEAN PATENT SPECIFICATION

(11) **EP 1 952 749 B1**
(45) Date of publication and mention of the grant of the patent: **21.04.2010**
(21) Application number: 08150898.8
(22) Date of filing: 31.01.2008
(51) Int. Cl.: A47L 15/42, D06F 37/28

(54) **Door-locking device, in particular for a domestic electrical appliance**
Türverschluss, insbesondere für eine elektrische Haushaltsvorrichtung
Dispositif de verrouillage de porte, en particulier pour un appareil électrique domestique

(30) Priority: 01.02.2007 IT TO20070074
(43) Date of publication of application: 06.08.2008
(73) Proprietor: BITRON S.p.A., 10122 Torino (IT)
(72) Inventor: Promutico, Fabrizio, 03010 Alatri (Frosinone) (IT); Saccocci, Andrea, 03020 Castro dei Volsci (Frosinone) (IT)
(74) Representative: Quinterno, Giuseppe

(56) References cited:
- EP-A- 1 741 378
- DE-A1- 19 848 275
- US-A1- 2004 083 769

## Description

The present invention relates to a door-locking device, in particular for a domestic electrical appliance.

The invention relates more particularly to a door-locking device for an appliance having a door provided with a hook member which may oscillate about a predetermined direction, the door-locking device comprising:
a support structure adapted to be secured to the appliance and having an opening in which, when the door is closed, the hook member is adapted to be inserted until it engages with a retaining formation provided in this structure in order to retain the door in the closed position, and
a slider, mounted to move in the structure in a direction substantially at right angles to the direction about which the hook may oscillate and adapted, as a result of the insertion of the hook in the support structure and its engagement with the retaining formation, to move from a rest position to a working position in which it can be locked and unlocked in order respectively to prevent and enable the disengagement of the hook member from the retaining formation as a result of traction tending to open the door.

A door-locking device of this type is described, for instance, in European Patent Application EP-1 741 378-A1 in the name of the applicants.

The door-locking device described in that document comprises a fixed retaining formation for the door hook, which hook is mounted in the door such that it may move in translation along a guided path between a retracted position and a forward position and may oscillate about a moving axis at right angles to this guided path.

US 2004/0083769 discloses a similar door-locking device for an appliance wherein an oscillatable hook member of the door is arranged to engage with a retaining formation of the control slider of the hook-holding device of the appliance.

An object of the present invention is to provide a door-locking device of the type described above adapted to be used with any hook member which, in a fully conventional manner, may simply oscillate about a predetermined direction with respect to the door.

These and other objects are achieved by the invention by means of a door-locking device of the above-mentioned type, characterized in that the retaining formation is provided in a carriage member which, as a result of traction on the hook in the direction of opening of the door, may be displaced in the support structure from a first to a second position, against the action of associated recall means, the carriage member being adapted to cooperate with the slider such that when the slider is in the working position in an unlocked condition, the passage of the carriage member from the first to the second position is adapted to cause the return of the slider to the rest position and a corresponding oscillation of the hook and its disengagement from the retaining formation.

Other advantages and features of the present invention will become clear from the following detailed description which is given with reference to the appended drawings which are provided purely by way of non-limiting example and in which:
Fig. 1 is a partial perspective view showing part of a door-locking device of the present invention and an associated oscillating hook of a door of a domestic electrical appliance;
Fig. 2 is an exploded perspective view of the part of the door-locking device shown in Fig. 1;
Figs. 3 and 4 are perspective views in cross-section along the lines III-III and IV-IV respectively of Fig. 1;
Fig. 5 is a cross-sectional view similar to that of Fig. 3 and shows a slider of the door-locking device in the rest position;
Fig. 6 is a view similar to that of Fig. 5 and shows the slider in the working position with the hook engaged in a retaining formation of a carriage member of the door lock; and
Fig. 7 is a view similar to that of Fig. 6 and shows a stage of disengagement of the hook from the retaining formation of the carriage member of a door-locking device of the invention.

In the drawings, a door-locking device of the present invention is shown overall by 1 and is adapted to cooperate with a hook 2 of a door D of a domestic electrical appliance.

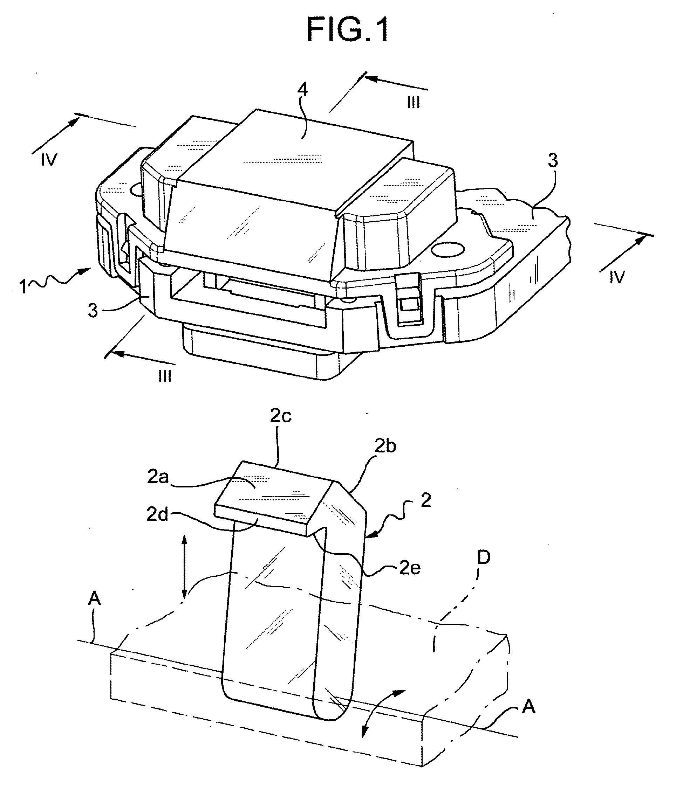

The hook 2 is of conventional type and is mounted to oscillate with respect to the door D in a direction which may move in translation shown by the axis A-A in Fig. 1. The distal end of the hook 2 has an end dihedral formation with two inclined planes shown by 2a and 2b in Figs. 1, 6 and 7, which join one another at a preferably rounded crest 2c. The planes 2a, 2b and the crest 2c are substantially parallel to the axis of oscillation A-A. The plane 2a is more extended than the plane 2b and forms the upper surface of a hooking tooth formation 2d which has a lower surface or layer 2e which is preferably also inclined with respect to the body of the hook 2.

The door-locking device 1 comprises a support structure which, in the embodiment shown by way of example, comprises a substantially plate-shaped support base 3 which is rigidly connected to a shaped cover shown by 4.

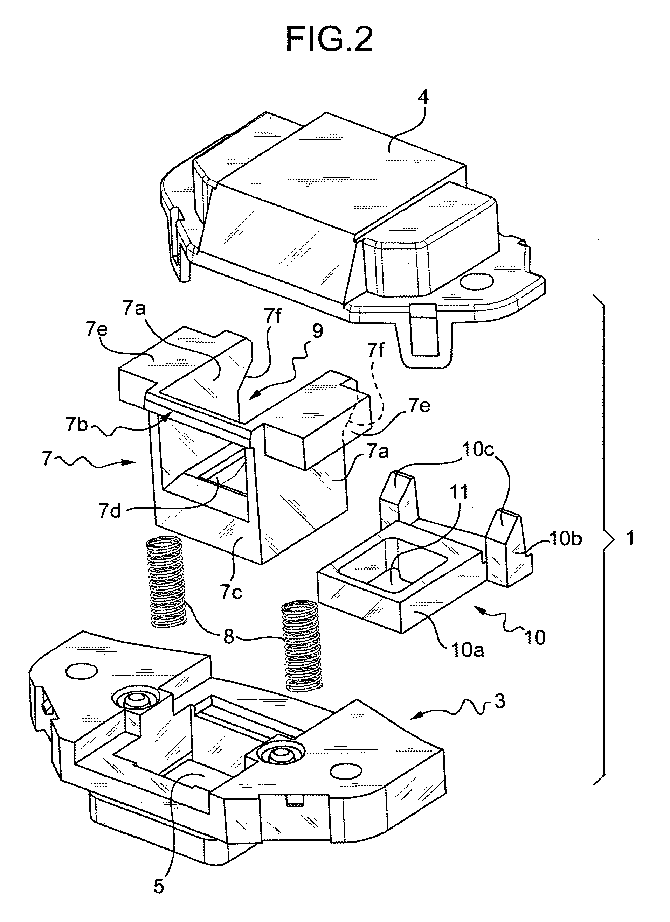

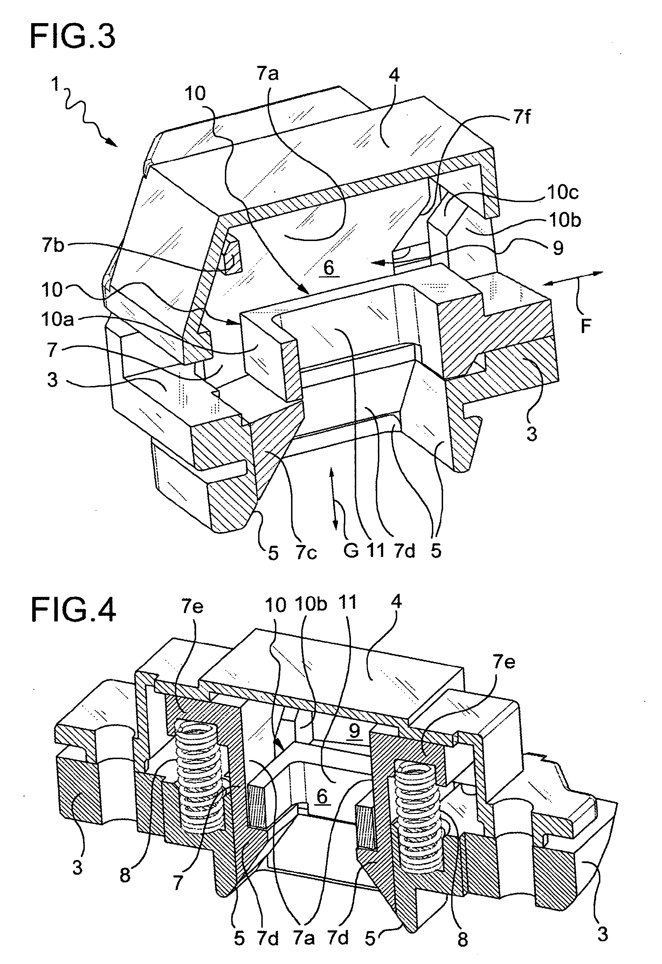

As can be seen from Figs. 2 to 7, an opening 5 is provided in the support base 3 for the insertion of the hook 2 of the door D of a domestic electrical appliance. This opening communicates with a chamber 6 (Figs. 3 to 7) defined between the base 3 and the cover 4 in which a carriage member shown overall by 7 is mounted to move in translation (see also Fig. 2).

In the embodiment shown by way of example, the carriage member 7 has two facing lateral walls 7a interconnected by an upper strut 7b and a lower crosspiece 7c. The latter, as can be seen for instance in Figs. 3 and 5-7, has a substantially triangular cross-section with an inclined side facing the opening 5 of the base 3 in order to facilitate, as will be described in detail below, the insertion of the distal end of the hook 2 into the door-locking device 1.

The lower sides of the facing walls 7a advantageously comprise respective projecting formations 7d which also have a substantially triangular cross-section (see Fig. 4 in particular). These projections 7d connect with the crosspiece 7c so as overall to form a U-shaped opening through which the hook 2 may pass.

At the top the carriage member 7 comprises a pair of flanges 7e which extend in opposite directions from the apices of the walls 7a (see Figs. 2 and 4 in particular).

Two helical springs, each disposed between a flange 7e of the carriage member 7 and the base 3, are shown by 8. These springs tend to maintain the carriage member in the rest position shown in Figs. 4 to 6 in which the strut 7b abuts against the inner surface of the cover 4.

An opening or passage 9 is defined between the facing walls 7a of the carriage member 7 on the side opposite the crosspieces 7b and 7c.

A slider is shown overall by 10 and is mounted to move in translation on the base 3 via the opening or passage 9 of the carriage member 7 in a direction shown by the double arrow F in Fig. 3, which direction is substantially at right angles to the direction of displacement of the carriage member 7 shown by the double arrow G in Fig. 3.

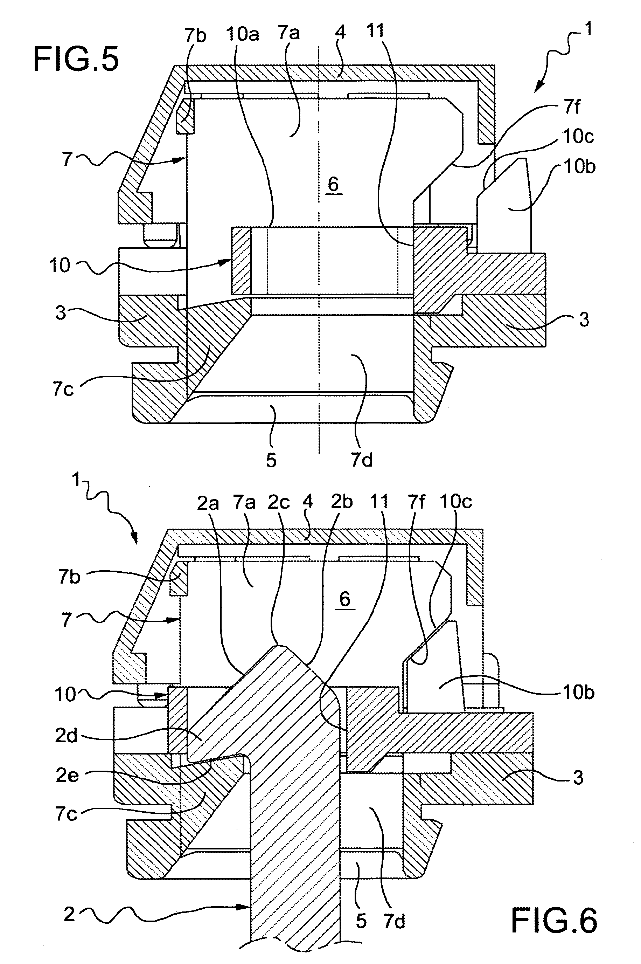

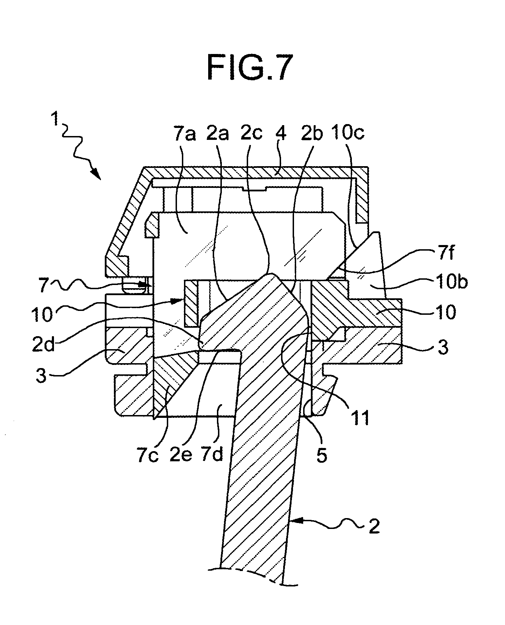

The slider 10 has an end 10a substantially shaped as a quadrangular ring, the interior of which forms an opening or passage 11 into which the distal end of the hook 2 may extend, as shown in Figs. 6 and 7.

In the vicinity of the ends 10a, the slider 10 comprises two transversely facing projecting formations 10b at right angles to the direction F of displacement of this slider. The projecting formations 10b of the slider 10 comprise respective top inclined planes 10c, preferably coplanar with one another, facing the rear edges of the facing walls 7a of the carriage member 7. These rear edges comprise respective inclined planes 7f having substantially the same inclination as the inclined planes 10c of the slider 10.

The arrangement is such that at rest (door D open) the door-locking device 1 assumes the configuration shown in particular in Figs. 3 to 5. In this configuration, the carriage member 7 is held by the springs 8 in the raised rest position in which the strut 7b abuts against the cover 4. Moreover, the slider 10, by means of resilient means (not shown), is held in the rest position in which the opening 11 of its end 10a is aligned with the opening or passage defined at the lower end of the carriage member 7. Moreover, the projecting formations 10b of the slider 10 are spaced from the walls 7a of the carriage member 7, as can be seen in Figs. 3 and 5 in particular.

When the door D is then closed, the hook 2 borne thereby penetrates into the opening 5 of the door-locking device and thus passes through the opening defined at the lower end of the carriage member 7. As it passes through, the inclined plane 2a of the distal end of the hook 2 slides against the inclined side of the crosspiece 7c of the carriage member 7, the hook being able to perform an oscillation about the axis A-A (Fig. 1). The distal end of the hook 2 thus penetrates into the opening 11 of the end portion 10a of the slider 10. As soon as the tooth 2d of the hook 2 passes beyond the crosspiece 7c of the carriage member 7, as a result of the recall action of resilient means associated in a known manner with the hook 2, the latter performs a small oscillation in the direction opposite that of the preceding oscillation, so that its tooth 2d engages with the crosspiece 7c of the carriage member 7 which acts as a retaining formation for this hook. This oscillation of the hook 2 also comprises the displacement of the slider 10 up to the working position shown in Fig. 6. In this condition, the projecting formations 10b of the slider 10 are brought into engagement with the rear edges of the walls 7a of the carriage member with their inclined planes 10c which engage the corresponding inclined planes 7f of the carriage member (Fig. 6).

When, in a known manner, the slider 10 is locked in the working position shown in Fig. 6, the door D is locked in the closed position. In this condition, any traction which may be exerted on the door D, and therefore on the hook 2, would not make it possible to release the hook 2 from the carriage member 7 which is locked in the position shown in Fig. 6 as a result of the locking of its inclined planes 7f against the corresponding inclined planes 10c of the slider 10.

If, however, the slider 10 is not locked in the working position shown in Fig. 6, the door D may be re-opened by exerting traction thereon. The traction exerted correspondingly on the hook 2 tends to cause the carriage member 7 to move downwards, when looking at Fig. 6, against the action of the associated recall springs 8. The engagement of the inclined planes 7f of the carriage member 7 with the inclined planes 10c of the slider 10 means that the latter is forced to move from the working position of Fig. 6 to the rest position of Fig. 7. During this movement, the slider takes the distal end of the hook 2 with it, the end tooth 2d of which may thus be disengaged from the retaining crosspiece 7c of the carriage member, as shown in Fig. 7.

The door D may thus be opened.

The door-locking device of the invention has a simple structure and is very reliable in operation. As already mentioned in the preamble to this description, this door-locking device is suitable for use in domestic electrical appliances and the like provided with a door with an oscillating hook of conventional type.

Naturally, the principle of the invention remaining the same, the forms of embodiment and details of construction may be varied widely with respect to those described and illustrated, which have been given purely by way of example, without thereby departing from the scope of the invention as defined in the accompanying claims.

## Claims

1. A door-locking device (1), in particular for the door (D) of a domestic electrical appliance provided with a hook member (2) which may oscillate about a predetermined axis (A-A), the door-locking device (1) comprising:
a support structure (3, 4) adapted to be secured to the appliance and having an opening (5) in which, when the door (D) is closed, the hook member (2) is adapted to be inserted until it engages with a retaining formation (7c) provided in this structure (3, 4) in order to retain the door (D) in the closed position, and
a slider (10), mounted to move in the structure (3, 4) in a direction (F) substantially at right angles to the axis (A-A) about which the hook (2) may oscillate and adapted, as a result of the insertion of the hook (2) in the support structure (3, 4) and its engagement with the retaining formation (7c), to move from a rest position to a working position in which it can be locked and unlocked in order respectively to prevent and enable the disengagement of the hook member (2) from the retaining formation (7c) as a result of traction tending to open the door (D),
the door locking device (1) being **characterized in that** the retaining formation (7c) is provided in a carriage member (7) which, as a result of traction on the hook (2) in the direction of opening of the door (D), may be displaced in the support structure (3, 4) from a first to a second position, against the action of associated recall means (8), the carriage member (7) being adapted to cooperate with the slider (10) such that when the slider (10) is in the working position in an unlocked condition, the passage of the carriage member (7) from the first to the second position is adapted to cause the return of the slider (10) to the rest position and a corresponding oscillation of the hook (2) and its disengagement from the retaining formation (7c).

2. A door-locking device according to claim 1, wherein the carriage member (7) and the slider (10) have at least one respective inclined plane (7f; 10c) adapted to cooperate with one another when the carriage member (7) passes from the first to the second position.

3. A door-locking device according to claim 1 or 2, wherein the slider (10) may move in translation with respect to the support structure (3, 4) within the carriage member (7) on the side opposite the hook (2) with respect to the retaining formation (7c).

4. A door-locking device according to any one of the preceding claims, wherein the slider (10) has one end (10a) shaped as a quadrangular ring defining an opening or passage (11) into which the distal end of the hook (2) may be inserted.

5. A door-locking device according to any one of the preceding claims, wherein the recall means comprise at least one spring (8) interposed between the carriage member (7) and the support structure (3, 4).

## Patentansprüche

1. Türverriegelungsvorrichtung (1), insbesondere für die Tür (D) einer häuslichen elektrischen Einrichtung, die mit einem Hakenelement (2) versehen ist, das um eine vorgegebene Achse (A-A) schwingen kann, wobei die Türverriegelungsvorrichtung (1) folgendes aufweist:
eine Trägerstruktur (3, 4), die angepasst ist, um an der Einrichtung befestigt zu werden, und die eine Öffnung (5) hat, wobei das Hakenelement (2) angepasst ist, in diese eingeführt zu werden, wenn die Tür (D) geschlossen wird, bis es mit einer Halteanordnung (7c), die in dieser Struktur (3, 4) vorgesehen ist, eingreift, um die Tür (D) in der geschlossenen Position zu halten, und
einen Schieber (10), der montiert ist, um sich in der Struktur (3, 4) in eine Richtung (F), die im Wesentlichen in einem rechten Winkel zu der Achse (A-A) verläuft, um die der Haken (2) schwingen kann, zu bewegen, und die angepasst ist, sich infolge der Einführung des Hakens (2) in die Trägerstruktur (3, 4) und seines Eingriffs mit der Halteanordnung (7c) von einer Ruheposition zu einer Arbeitsposition zu bewegen, in der er verriegelt und entriegelt werden kann, um die Ausrückung des Hakenelements (2) von der Halteanordnung (7c) infolge einer Zugkraft, die dazu tendiert, die Tür (D) zu öffnen, zu verhindern bzw. zu ermöglichen,
wobei die Türverriegelungsvorrichtung (1) **dadurch gekennzeichnet ist, dass** die Halteanordnung (7c) in einem Schlittenelement (7) vorgesehen ist, das infolge einer Zugkraft an dem Haken (2) in die Richtung eines Öffnens der Tür (D) in der Trägerstruktur (3, 4) von einer ersten zu einer zweiten Position gegen die Wirkung einer zugehörigen Rückholeinrichtung (8) versetzt werden kann, wobei das Schlittenelement (7) angepasst ist, um mit dem Schieber (10) so zusammenzuwirken, dass, wenn der Schieber (10) sich in der Arbeitsposition in einem unverriegelten Zustand befindet, der Durchgang des Schlittenelements (7) von der ersten zu der zweiten Position angepasst ist, die Rückkehr des Schiebers (10) zu der Ruheposition und eine entsprechende Schwingung des Hakens (2) und sein Ausrücken von der Halteanordnung (7c) zu verursachen.

2. Türverriegelungsvorrichtung nach Anspruch 1, wobei das Schlittenelement (7) und der Schieber (10) zumindest eine entsprechende geneigte Ebene (7f; 10c) haben, die angepasst sind, um miteinander zu kooperieren, wenn das Schlittenelement (7) von der ersten zu der zweiten Position gelangt.

3. Türverriegelungsvorrichtung nach Anspruch 1 oder 2, wobei der Schieber (10) sich mit einer Verschiebung in Bezug auf die Trägerstruktur (3, 4) innerhalb des Schlittenelements (7) auf der Seite entgegensetzt des Hakens (2) in Bezug auf die Halteanordnung (7c) bewegen kann.

4. Türverriegelungsvorrichtung nach einem der vorhergehenden Ansprüche, wobei der Schieber (10) ein Ende (10a) hat, das als ein viereckiger Ring geformt ist, der eine Öffnung oder einen Durchgang (11) definiert, in die /in den das entfernte Ende des Hakens (2) eingeführt werden kann.

5. Türverriegelungsvorrichtung nach einem der vorhergehenden Ansprüche, wobei die Rückholeinrichtung zumindest eine Feder (8) hat, die zwischen dem Schlittenelement (7) und der Trägerstruktur (3, 4) angeordnet ist.

## Revendications

1. Dispositif de verrouillage de porte (1), en particulier pour la porte (D) d'un appareil électrique domestique prévu avec un élément de crochet (2) qui peut osciller autour d'un axe prédéterminé (A-A), le dispositif de verrouillage de porte (1) comprenant :
→ une structure de support (3, 4) adaptée pour être fixée sur l'appareil et ayant une ouver-ture (5) dans laquelle, lorsque la porte (D) est fermée, l'élément de crochet (2) est adapté pour être inséré jusqu'à ce qu'il se met en prise avec une formation de retenue (7c) prévue dans cette structure (3, 4) afin de retenir la porte (D) dans la position fermée, et
→ une glissière (10) montée pour se déplacer dans la structure (3, 4) dans une direction (F) sen-siblement en angle droit par rapport à l'axe (A-A) autour duquel le crochet (2) peut osciller et adapté, suite à l'insertion du crochet (2) dans la structure de support (3, 4) et à sa mise en prise avec la formation de retenue (7c), pour se déplacer d'une position de repos à une position de travail dans laquelle elle peut être bloquée et débloquée afin d'empêcher et de permettre respectivement le dégagement de l'élément de crochet (2) de la formation de retenue (7c) suite à la traction ayant tendance à ouvrir la porte (D),
le dispositif de verrouillage de porte (1) étant **caractérisé en ce que** la formation de retenue (7c) est prévue avec un élément de chariot (7) qui, suite à la traction sur le crochet (2) dans la direction d'ouverture de la porte (D), peut être déplacé dans la structure de support (3, 4) d'une première à une seconde position, contre l'action des moyens de rappel (8) associés, l'élément de chariot (7) étant adapté pour coopé-rer avec la glissière (10) de sorte que lorsque la glissière (10) est dans la position de travail dans une condition déverrouillée, le passage de l'élément de chariot (7) de la première à la seconde position est adapté pour provoquer le retour de la glissière (10) dans la position de repos et une oscillation correspondante du cro-chet (2) et son dégagement de la formation de retenue (7c).

2. Dispositif de verrouillage de porte selon la revendication 1, dans lequel l'élément de chariot (7) et la glissière (10) ont au moins un plan incliné (7f ; 10c) respectif adapté pour coopérer entre eux lorsque l'élément de chariot (7) passe de la première à la seconde position.

3. Dispositif de verrouillage de porte selon la revendication 1 ou 2, dans lequel la glissière (10) peut se déplacer selon un mouvement de translation par rapport à la structure de support (3, 4) à l'intérieur de l'élément de chariot (7) du côté opposé au crochet (2) par rapport à la formation de retenue (7c).

4. Dispositif de verrouillage de porte selon l'une quelconque des revendications précédentes, dans lequel la glissière (10) a une extrémité (10a) formée comme une bague quadrangulaire défi-nissant une ouverture ou passage (11) dans laquelle l'extrémité distale du crochet (2) peut être insérée.

5. Dispositif de verrouillage de porte selon l'une quelconque des revendications précédentes, dans lequel les moyens de rappel comprennent au moins un ressort (8) intercalé entre l'élément de chariot (7) et la structure de support (3, 4).
